# EUROPÄISCHE PATENTANMELDUNG

(11) **EP 4 681 897 A1**
(43) Veröffentlichungstag der Anmeldung: **21.01.2026**
(21) Anmeldenummer: 25187711.4
(22) Anmeldetag: 07.07.2025
(51) Int. Cl.: B27L 11/02, A01G 3/00, B02C 18/14

(54) **HACKSCHNITZELROTOR FÜR EIN HACKERFAHRZEUG UND ZUM ZERHACKEN VON, INSBESONDERE STAMM- UND/ODER ASTARTIGEN, ROHHOLZ ZUR HERSTELLUNG VON HACKSCHNITZELN**

(30) Priorität: 18.07.2024 DE 102024120308
(71) Anmelder: ALBACH Maschinenbau AG, 85088 Menning (DE)
(72) Erfinder: Bachmaier, Franz, 85088 Menning (DE); Gaul, Albert, 85129 Oberdolling (DE)
(74) Vertreter: Canzler & Bergmeier Patentanwälte Partnerschaft mbB

(57) **Zusammenfassung**

Die Erfindung betrifft einen Hackschnitzelrotor (1) für ein Hackerfahrzeug und zum Zerhacken von, insbesondere stamm- und/oder astartigen, Rohholz zur Herstellung von Hackschnitzeln mit zumindest einer Rotorwelle (2), mit zumindest einer auf der Rotorwelle (2) angeordneten Hackereinheit (3), mittels der das Rohholz zerkleinert werden kann, und mit einer Überlastsicherung (4). Des Weiteren ist die Überlastsicherung (4) derart ausgebildet und/oder angeordnet, dass diese ein Drehmoment zum Rotieren der zumindest einen Hackereinheit (3) von der Rotorwelle (2) auf die zumindest eine Hackereinheit (3) übertragen kann. Außerdem betrifft die Erfindung das Hackerfahrzeug.

## Beschreibung

Die vorliegende Erfindung betrifft einen Hackschnitzelrotor für ein Hackerfahrzeug und zum Zerhacken von, insbesondere stamm- und/oder astartigen, Rohholz zur Herstellung von Hackschnitzeln mit zumindest einer Rotorwelle, mit zumindest einer auf der Rotorwelle angeordneten Hackereinheit, mittels der das Rohholz zerkleinert werden kann, und mit einer Überlastsicherung.

Aus der DE 203 10 751 U1 ist eine Messertrommel für Holzhackmaschinen bekannt, bei der die Messer mittels einer Überlastsicherung gesichert sind.

Aufgabe der vorliegenden Erfindung ist es, größere Beschädigungen bei einer Überlastung des Hackschnitzelrotors zu verhindern.

Die Aufgabe wird gelöst durch einen Hackschnitzelrotor, eine Hackervorrichtung und/oder ein Hackerfahrzeug mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Hackschnitzelrotor für ein Hackerfahrzeug und zum Zerhacken von, insbesondere stamm- und/oder astartigen, Rohholz zur Herstellung von Hackschnitzeln. Bei dem Hackerfahrzeug, für den der Hackschnitzelrotor vorgesehen ist, kann es sich beispielsweise um eine, insbesondere forstwirtschaftliche, Arbeitsmaschine, einem Hacker-LKW und/oder einen Anhänger handeln. Mit Hilfe des Hackschnitzelrotors können Baumstämme oder Äste zerhäckselt werden, um Holzschnitzel herzustellen. Die Holzschnitzel können dann weiterverarbeitet, zum Heizen verwendet oder im Garten ausgelegt werden.

Der Hackschnitzelrotor umfasst zumindest eine Rotorwelle. Die Rotorwelle kann mit einem Antrieb gekoppelt werden, um den Hackschnitzelrotor anzutreiben. Hierbei kann zwischen der Rotorwelle und dem Antrieb zumindest ein Getriebe vorgesehen sein. Der Antrieb kann der Motor vom Hackerfahrzeug sein. Zusätzlich oder alternativ kann das Hackerfahrzeug einen separaten Antrieb bzw. Motor aufweisen.

Der Hackschnitzelrotor umfasst außerdem zumindest eine auf der Rotorwelle angeordnete Hackereinheit, mittels der das Rohholz zerkleinert werden kann.

Des Weiteren umfasst der Hackschnitzelrotor eine Überlastsicherung. Die Überlastsicherung schützt den Hackschnitzelrotor vor Schäden durch übermäßiges Drehmoment. Sie sorgt für eine längere Lebensdauer des Hackschnitzelrotors, der Rotorwelle und der Hackereinheit. Dies ist besonders wichtig, um den Betrieb des Hackschnitzelrotors sicher und zuverlässig zu gestalten.

Ferner ist die Überlastsicherung derart ausgebildet und/oder angeordnet, dass diese ein Drehmoment zum Rotieren der zumindest einen Hackereinheit von der Rotorwelle auf die zumindest eine Hackereinheit übertragen kann. Dies gewährleistet, dass die Hackereinheit effektiv betrieben wird. Durch die Übertragung des Drehmoments wird das Rohholz effizient zerkleinert. Wenn die Überlastsicherung auslöst, wird das Drehmoment nicht mehr zwischen Rotorwelle und Hackereinheit übertragen, was bedeutet, dass auf die Hackereinheit kein Drehmoment mehr wirkt. Bei einem Verklemmen von Fremdkörpern während dem Häckseln, kann infolgedessen die Rotorwelle von der Hackereinheit entkoppelt werden. Dadurch können mechanische Beschädigungen an der Rotorwelle, dem angekoppelten Getriebe und/oder des Antriebs verhindert werden. Des Weiteren wirkt dann auf die Hackereinheit kein Drehmoment mehr, so dass auch diese nicht mehr beschädigt wird. Die Hackereinheit verklemmt sich hierbei eventuell mit dem Fremdkörper, allerdings wird die Hackereinheit nicht mehr mit dem Drehmoment beaufschlagt.

Es ist vorteilhaft, wenn die Überlastsicherung derart ausgebildet und/oder angeordnet ist, dass diese ein maximales Drehmoment von der Rotorwelle auf die zumindest eine Hackereinheit übertragen kann. Zusätzlich oder alternativ ist es von Vorteil, wenn die Überlastsicherung bei Überschreiten des maximalen Drehmoments die Übertragung des Drehmoments von der Rotorwelle auf die zumindest eine Hackereinheit unterbricht. Dies bedeutet, dass, wenn die Überlastsicherung auslöst, das Drehmoment nicht mehr zwischen der Rotorwelle und der Hackereinheit übertragen wird. Dies verhindert eine Überlastung und mögliche Schäden an der Rotorwelle und der Hackereinheit. Wenn beispielsweise die Hackereinheit blockiert wird, weil ein Fremdkörper zum Hackschnitzelrotor gelangt, löst die Überlastsicherung aus und die Hackereinheit kann sich verhaken, wobei aber die Rotorwelle nicht mehr belastet wird.

In einer vorteilhaften Weiterbildung der Erfindung ist die Überlastsicherung scheibenseitig mit der Hackereinheit und wellenseitig mit der Rotorwelle gekoppelt. Diese Kopplung ermöglicht eine zuverlässige Übertragung des Drehmoments und schützt gleichzeitig vor mechanischen Überlastungen. Durch die scheibenseitige und wellenseitige Kopplung kann die Überlastsicherung effizient arbeiten und das System vor Schäden schützen.

Es ist vorteilhaft, wenn die Hackereinheit drehbar auf der Rotorwelle angeordnet ist, so dass sich die Hackereinheit gegenüber der Rotorwelle nach Unterbrechung der Übertragung des Drehmoments durch die Überlastsicherung frei drehen kann. Wenn die Hackereinheit blockiert wird und die Überlastsicherung auslöst, kann sich die Rotorwelle weiterdrehen, ohne dass das Drehmoment übertragen wird, was die mechanischen Komponenten vor Beschädigungen schützt. Die Hackereinheit kann sich dadurch frei auf der Rotorwelle drehen. Wenn die Hackereinheit blockiert ist, weil ein Fremdkörper zum Hackschnitzelrotor gelangt, löst die Überlastsicherung aus und die Rotorwelle wird nicht weiter belastet. Dies trägt zur Langlebigkeit und Zuverlässigkeit des Systems bei.

Von Vorteil ist es, wenn die Hackereinheit mittels eines Hackereinheitslagers drehbar auf der Rotorwelle angeordnet ist. Das Hackereinheitslager kann beispielsweise ein Wälzlager sein. Zusätzlich oder alternativ kann das Hackereinheitslager auch ein Gleitlager sein. Dies reduziert die Reibung und den Verschleiß und ermöglicht eine reibungslose Drehung der Rotorwelle gegenüber der Hackereinheit, wenn die Überlastsicherung ausgelöst hat, so dass sich die Rotorwelle weiterdreht und die Hackereinheit blockiert ist. Ein Hackereinheitslager, beispielsweise ein Wälzlager, sorgt für eine stabile und effiziente Drehung, was die Gesamtleistung und die Lebensdauer der Hackereinheit erhöht.

Es ist vorteilhaft, wenn auf der Rotorwelle eine Mitnehmereinheit angeordnet ist. Die Mitnehmereinheit kann drehfest auf der Rotorwelle angeordnet sein. Mit Hilfe der Mitnehmereinheit kann die Hackereinheit von der Rotorwelle angetrieben werden. Die Mitnehmereinheit ist hierbei zwischen der Rotorwelle und der Hackereinheit angeordnet. Die Mitnehmereinheit überträgt somit das Drehmoment von der Rotorwelle auf die Hackereinheit über die Überlastsicherung.

Gemäß einer vorteilhaften Weiterbildung der Erfindung verbindet die Überlastsicherung die Mitnehmereinheit und die Hackereinheit, um die Drehbewegung der Rotorwelle auf die Hackereinheit zu übertragen. Diese Verbindung sorgt dafür, dass das Drehmoment zuverlässig übertragen wird und gleichzeitig bei einer Überlastung unterbrochen werden kann. Dadurch kann eine Übertragung des Drehmoments unter normalen Bedingungen und Schutz bei Überlastung erzielt werden. Nach dem Auslösen der Überlastsicherung dreht sich somit die Mitnehmereinheit weiterhin mit der Rotorwelle mit, jedoch gegen die beispielsweise verklemmte und stillstehende Hackereinheit.

Es ist vorteilhaft, wenn die Mitnehmereinheit kraftschlüssig auf der Rotorwelle angeordnet ist. Zusätzlich oder alternativ ist es von Vorteil, wenn die Mitnehmereinheit formschlüssig auf der Rotorwelle angeordnet ist. Zusätzlich oder alternativ ist es von Vorteil, wenn die Mitnehmereinheit stoffschlüssig auf der Rotorwelle angeordnet ist. Dies stellt eine sichere und feste Verbindung zwischen den Komponenten sicher, was zu einer effizienten Drehmomentübertragung von der Rotorwelle auf die Mitnehmereinheit beiträgt. Diese Anordnung verhindert ein Verrutschen oder Lösen der Mitnehmereinheit und gewährleistet eine dauerhafte und stabile Funktion.

In einer vorteilhaften Weiterbildung der Erfindung ist die Mitnehmereinheit mittels einer Spannvorrichtung auf der Rotorwelle angeordnet. Die Spannvorrichtung ermöglicht eine einfache und sichere Befestigung der Mitnehmereinheit auf der Rotorwelle. Dies erleichtert beispielsweise auch die Montage und Demontage und sorgt gleichzeitig für eine feste Verbindung. Die Spannvorrichtung kann im Allgemeinen auch eine Fixiervorrichtung sein, mittels der die Mitnehmereinheit, insbesondere drehfest, auf der Rotorwelle angeordnet ist.

Es ist vorteilhaft, wenn die Mitnehmereinheit eine Mitnehmerscheibe ist. Die Verwendung einer Mitnehmerscheibe ermöglicht eine gleichmäßige Verteilung und Übertragung des Drehmoments von der Mitnehmerscheibe auf die Hackereinheit und trägt zur Stabilität der gesamten Einheit bei.

Von Vorteil ist es, wenn die Überlastsicherung zwischen einer Hackerstirnseite der Hackereinheit und einer Mitnehmerstirnseite der Mitnehmereinheit angeordnet ist. Die Platzierung zwischen den Stirnseiten sorgt für eine kompakte und effiziente Integration der Überlastsicherung.

Es ist vorteilhaft, wenn die Überlastsicherung zumindest ein Überlastelement umfasst, das die Drehbewegung und/oder das Drehmoment von der Rotorwelle auf die Hackereinheit übertragen kann. Das Überlastelement sorgt für eine kontrollierte und sichere Drehmomentübertragung, die bei einer Überlastung unterbrochen werden kann. Dies schützt die mechanischen Komponenten vor Schäden durch übermäßiges Drehmoment.

Gemäß einer vorteilhaften Weiterbildung der Erfindung ist die Überlastsicherung, insbesondere das zumindest eine Überlastelement, in einer Hackereinheitenöffnung der Hackereinheit angeordnet. Diese Anordnung ermöglicht eine kompakte und effiziente Integration der Überlastsicherung in die Hackereinheit. Die Platzierung in der Hackereinheitenöffnung sorgt für eine stabile und sichere Befestigung des Überlastelements bzw. der Überlastsicherung.

Es ist vorteilhaft, wenn die Überlastsicherung, insbesondere das zumindest eine Überlastelement, in einer Mitnehmeröffnung der Mitnehmereinheit angeordnet ist. Diese Anordnung sorgt dafür, dass die Überlastsicherung, insbesondere das Überlastelement, fest und sicher in der Mitnehmereinheit positioniert ist. Dies gewährleistet eine zuverlässige Funktion der Überlastsicherung unter Betriebsbedingungen.

Es ist vorteilhaft, wenn die Hackereinheitenöffnung quer zu einer Radialrichtung der Hackereinheit und/oder der Mitnehmereinheit orientiert ist. Zusätzlich oder alternativ ist es von Vorteil, wenn die Mitnehmeröffnung quer zu einer Radialrichtung der Hackereinheit und/oder der Mitnehmereinheit orientiert ist. Diese Orientierung ermöglicht eine optimale Positionierung und Funktionalität der Überlastelemente.

Gemäß einer vorteilhaften Weiterbildung der Erfindung ist die Hackereinheitenöffnung in Richtung einer Axialrichtung der Rotorwelle orientiert. Zusätzlich oder alternativ ist es von Vorteil, wenn die Mitnehmeröffnung in Richtung einer Axialrichtung der Rotorwelle orientiert ist. Diese Orientierung trägt zur Stabilität und Effizienz der Überlastsicherung bei. Die axiale Ausrichtung sorgt für eine optimale Kraftübertragung und schützt die mechanischen Komponenten vor Überlastung.

Es ist vorteilhaft, wenn das zumindest eine Überlastelement ein Zerstörelement ist, das im bestimmungsgemäßen Gebrauch bei Überschreiten des maximalen Drehmoments zerstört wird. Das Zerstörelement bietet eine zuverlässige Methode zur Unterbrechung der Drehmomentübertragung im Falle einer Überlastung bzw. bei Überschreiten des maximalen Drehmoments. Dies schützt die Hackereinheit und die Rotorwelle vor mechanischen Schäden.

Von Vorteil ist es, wenn die Überlastsicherung eine Sollbruchstelle aufweist. Eine Sollbruchstelle ermöglicht eine präzise Kontrolle der maximalen Belastung, die die Überlastsicherung aushalten kann. Dies bietet einen zuverlässigen Schutz und verhindert Schäden an der Hackereinheit und der Rotorwelle.

Es ist vorteilhaft, wenn die Überlastsicherung und/oder das zumindest eine Überlastelement eine Schereinheit ist. Die Schereinheit sorgt für eine kontrollierte und sichere Trennung der Komponenten im Falle einer Überlastung. Dies erhöht die Sicherheit und Zuverlässigkeit des Systems.

In einer vorteilhaften Weiterbildung der Erfindung ist die Schereinheit ein Scherstift und/oder eine Scherschraube. Scherstifte und Scherschrauben bieten eine einfache und effektive Lösung für die Überlastsicherung. Sie sind leicht zu ersetzen, sind kostengünstig und bieten einen zuverlässigen Schutz vor mechanischen Überlastungen. Die Scherschrauben können beispielsweise in die Hackereinheitenöffnung und/oder in die Mitnehmeröffnung eingeschraubt sein. Die Hackereinheitenöffnung und/oder die Mitnehmeröffnung können hierfür entsprechende Gewinde aufweisen. Infolgedessen ist das Überlastelement in der Hackereinheitenöffnung und/oder in der Mitnehmeröffnung fixiert.

Es ist vorteilhaft, wenn die Überlastsicherung mehrere Überlastelemente umfasst. Die mehreren Überlastelemente können in einer Umfangsrichtung der Hackereinheit voneinander beabstandet angeordnet sein. Die Verteilung in Umfangsrichtung sorgt für eine gleichmäßige Belastung und verbessert die Effizienz der Überlastsicherung.

Gemäß einer vorteilhaften Weiterbildung der Erfindung weisen die mehreren Überlastelemente denselben radialen Abstand zur Rotorwelle auf. Diese Anordnung sorgt für eine gleichmäßige Verteilung der Belastung und verbessert die Effizienz der Überlastsicherung. Die radiale Anordnung trägt zur Stabilität und Sicherheit des Systems bei. Durch denselben radialen Abstand wirkt auf jedes Überlastelement auch dasselbe Drehmoment.

Ebenso ist es von Vorteil, wenn auf der Rotorwelle mehrere Hackereinheiten angeordnet sind. Zumindest einigen Hackereinheiten kann eine eigene Überlastsicherung zugeordnet sein. Von Vorteil ist es, wenn jeder Hackereinheit eine separate Überlastsicherung zugeordnet ist. Durch die mehreren Hackereinheiten kann der Hackschnitzelrotor skaliert werden, so dass eine Produktivität entsprechend der Anzahl der Hackereinheiten angepasst werden kann. Durch die mehreren Überlastsicherungen können die mehreren Hackereinheiten unabhängig gesichert werden, was die Zuverlässigkeit und Sicherheit des Systems erhöht. Blockiert beispielsweise lediglich eine Hackereinheit, löst auch nur diese entsprechend dieser Hackereinheit zugeordnete Überlastsicherung aus. Die anderen Überlastsicherungen sind davon nicht betroffen. Die anderen Hackereinheiten rotieren weiter, da deren Überlastsicherung das Drehmoment noch überträgt.

Es ist vorteilhaft, wenn die mehreren Hackereinheiten voneinander unabhängig auf der Rotorwelle angeordnet sind. Diese Unabhängigkeit erhöht die Flexibilität und die Effizienz des Systems. Jede Hackereinheit kann unabhängig voneinander gesichert werden, was die Wartung und den Betrieb erleichtert.

Gemäß einer vorteilhaften Weiterbildung der Erfindung sind die mehreren Hackereinheiten voneinander beabstandet auf der Rotorwelle angeordnet.

Eine beabstandete Anordnung ermöglicht eine bessere Verteilung der Hackereinheiten und verbessert die Gesamtleistung des Hackschnitzelrotors. Zwischen den Hackereinheiten können die Hackschnitzel abtransportiert werden.

Es ist vorteilhaft, wenn die zumindest eine Hackereinheit eine Rotorscheibe ist. Rotorscheiben bieten eine robuste und effiziente Lösung für das Zerkleinern von Rohholz. Sie sind langlebig und können große Mengen an Rohholz effektiv verarbeiten.

Des Weiteren ist es von Vorteil, wenn die zumindest eine Hackereinheit ein Messer zum Zerhacken des Rohholzes umfasst. Bei mehreren Hackereinheiten können entsprechend mehrere Messer vorhanden sein. Hierbei kann jeder Hackereinheit ein eigenes Messer zugeordnet sein. Zusätzlich oder alternativ kann ein Messer auch an zwei Hackereinheiten angeordnet sein. In diesem Fall kann beispielsweise das Messer derart an den beiden Hackereinheiten angeordnet sein, dass das Messer einen Zwischenraum zwischen den beiden Hackereinheiten überspannt.

Vorgeschlagen wir des Weiteren eine Hackervorrichtung für ein Hackerfahrzeug und zum Zerhacken von, insbesondere stamm- und/oder astartigen, Rohholz zur Herstellung von Hackschnitzeln. Die Hackervorrichtung umfasst zumindest einen Hackschnitzelrotor. Der Hackschnitzelrotor weist hierbei zumindest ein Merkmal der vorangegangenen und/oder nachfolgenden Beschreibung auf.

Vorgeschlagen wird ferner ein Hackerfahrzeug zum Zerhacken von, insbesondere stamm- und/oder astartigen, Rohholz zur Herstellung von Hackschnitzeln. Das Hackerfahrzeug weist ferner eine Hackervorrichtung auf, die zumindest einen Hackschnitzelrotor umfasst. Mit Hilfe der Hackervorrichtung bzw. mit Hilfe des Hackschnitzelrotors kann das, insbesondere stamm- und/oder astartige, Rohholz zu den Hackschnitzeln zerhackt werden.

Bei dem Hackerfahrzeug kann es sich beispielsweise um einen Hacker-LKW handeln. Der Hacker-LKW umfasst einen LKW (=Lastkraftwagen bzw. Lastkraftfahrzeug) und die Hackervorrichtung. Der Hacker-LKW weist Ähnlichkeiten zu einem LKW auf. Der Hacker-LKW weist hierbei einen eigenen Fahrzeugantrieb bzw. LKW-Antrieb auf. Der Hacker-LKW kann und darf auf öffentlichen Straßen fahren, um den Hacker-LKW zu dem Ort zu fahren, an dem das Rohholz zu den Hackschnitzeln zerhackt werden soll. Als Hacker-LKW kann er weite Strecken zum Einsatzort zurücklegen und kann daher somit in einer großen Region bzw. überregional eingesetzt werden. Zusätzlich oder alternativ kann das Hackerfahrzeug auch eine, insbesondere fahrbare, vorzugsweise selbstfahrende, Arbeitsmaschine sein. Die Arbeitsmaschine ist speziell und für den hauptsächlichen Gebrauch im Wald bzw. nahe dem Rohholz konzipiert. Die fahrbare Arbeitsmaschine kann eine forstwirtschaftliche Arbeitsmaschine sein und dient überwiegend dazu, im und/oder am Wald verwendet zu werden, wo sich das Rohholz befindet. Arbeitsmaschinen können beispielsweise eine zulässige Höchstgeschwindigkeit von 20 km/h aufweisen. Sie sind daher hauptsächlich für den regionalen Gebrauch konzipiert. Die Arbeitsmaschine weist hierbei ebenfalls einen Antrieb, einen Fahrzeugantrieb auf. Zusätzlich oder alternativ kann das Hackerfahrzeug auch ein Anhänger mit der darauf angeordneten Hackervorrichtung sein. Die Hackervorrichtung kann als eine eigenständige Einheit auf dem Anhänger angeordnet sein. Der Anhänger weist hierbei keinen eigenen Antrieb auf, sondern wird von einem anderen Zugfahrzeug, beispielsweise einem LKW oder einem Traktor, gezogen. Der Anhänger kann hierbei eine entsprechende Kupplungsvorrichtung aufweisen, um den Anhänger mit dem Zugfahrzeug zu verbinden. Der Anhänger kann hierbei ein Starrdeichselanhänger, ein Gelenkdeichselanhänger und/oder ein Sattelanhänger sein. Der Anhänger mit der Hackervorrichtung ist hierbei sowohl für den regionalen als auch für den überregionalen Gebrauch konzipiert. Der Hauptvorteil des Anhängers mit der Hackervorrichtung liegt allerdings in der kostengünstigen Ausführung des Systems. Der Anhänger mit der Hackervorrichtung kann zum Verarbeitungsort des Rohholzes transportiert bzw. vom Zugfahrzeug gezogen werden. Das Zugfahrzeug kann dann abgekoppelt werden und wieder wegfahren.

Der Hackschnitzelrotor ist hierbei gemäß einem oder mehreren Merkmalen der vorangegangenen und/oder nachfolgenden Beschreibung ausgebildet, wobei die genannten Merkmale einzeln oder in beliebiger Kombination vorhanden sein können.

Das Hackerfahrzeug kann somit eine Hackervorrichtung aufweisen, mittels der das Rohholz zu den Hackschnitzeln zerhackt wird. Die Hackervorrichtung umfasst hierbei den Hackschnitzelrotor.

Die Hackervorrichtung kann einen eigenen Antrieb aufweisen, der den Hackschnitzelrotor antreibt. Zusätzlich oder alternativ kann die Hackervorrichtung auch von einem Antrieb des Hackerfahrzeugs, insbesondere einem Fahrzeugantrieb, angetrieben werden. Es treibt somit der Antrieb des Hackerfahrzeugs den Hackschnitzelrotor an. Beispielsweise kann die Hackervorrichtung bzw. der Hackschnitzelrotor von einem Antrieb bzw. Motor des LKW, des Hacker-LKWs und/oder der Arbeitsmaschine angetrieben werden. Dadurch kann ein zusätzlicher Antrieb eingespart werden, da das Hackerfahrzeug zum Fahren ohnehin einen Antrieb aufweist. Sollte das Hackerfahrzeug keinen Antrieb aufweisen, weil es beispielsweise eine Anhängerform aufweist, dann wird ein eigener Antrieb vorgesehen.

Vorteilhaft ist es, wenn die Hackervorrichtung, die den Hackschnitzelrotor umfasst, fest und/oder lösbar mit dem Hackerfahrzeug, insbesondere dem Hacker-LKW, der Arbeitsmaschine und/oder dem Anhänger, verbunden ist. Beispielsweise kann die Hackervorrichtung eine bauliche Einheit mit dem Hackerfahrzeug bilden. Infolgedessen ist die Hackervorrichtung fest mit dem Hackerfahrzeug verbunden. Zusätzlich oder alternativ kann die Hackervorrichtung auch mit einem Kran auf den LKW bzw. eine Ladefläche des LKWs oder auf den Anhänger gehoben und gegebenenfalls dort befestigt werden. Hierdurch kann die Hackervorrichtung flexibel und nahezu überall eingesetzt werden.

Weitere Vorteile der Erfindung sind in den nachfolgenden Ausführungsbeispielen beschrieben. Es zeigen:
- **Figur 1**: eine perspektivische Ansicht eines Hackschnitzelrotors mit einer Rotorwelle und zumindest einer Hackereinheit,
- **Figur 2**: eine Schnittansicht der Hackereinheit, der Mitnehmereinheit, der Überlastsicherung und der Rotorwelle und
- **Figur 3**: eine Schnittansicht der Hackereinheit, der Mitnehmereinheit, der Überlastsicherung und der Rotorwelle.

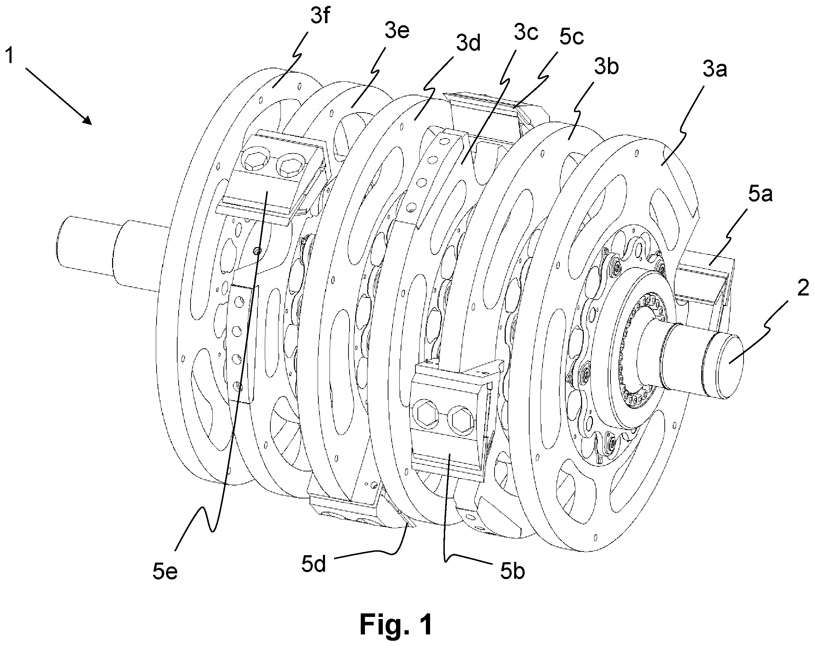

Das in Figur 1 dargestellte Ausführungsbeispiel zeigt einen Hackschnitzelrotor 1, der für ein Hackerfahrzeug verwendet werden kann und zur Zerkleinerung von Rohholz dient, um Hackschnitzel zu erzeugen. Das Rohholz kann stamm- und/oder astartig sein. Das Rohholz kann somit Baumstämme und/oder Äste umfassen, die zu den Hackschnitzeln verarbeitet werden. Das Hackerfahrzeug kann eine hier nicht gezeigte Hackervorrichtung umfassen, die den Hackschnitzelrotor 1 umfasst, um das Rohholz zu Zerhacken. Derartige Hackerfahrzeuge werden beispielsweise bei forstwirtschaftlichen Betrieben eingesetzt, die die Hackschnitzel herstellen.

Gemäß Figur 1 umfasst der Hackschnitzelrotor 1 eine Rotorwelle 2. Die Rotorwelle 2 dient als Hauptachse des Rotors und trägt die Hackereinheiten 3. Ein Vorteil der Rotorwelle 2 ist ihre Fähigkeit, eine stabile und gleichmäßige Drehbewegung zu gewährleisten, was zu einer effektiven Zerkleinerung des Rohholzes beiträgt.

Auf der Rotorwelle 2 sind mehrere Hackereinheiten 3, beispielsweise sechs Hackereinheiten 3a - 3f, angeordnet. Jede dieser Hackereinheiten 3 ist derart konzipiert, dass sie das Rohholz effizient zerkleinern kann.

Des Weiteren sind Messer 5 dargestellt, wobei jeder Hackereinheit 3 ein Messer 5 zugeordnet sein kann. Allerdings sind hier nicht alle Messer 5 zu sehen. Mit Hilfe des Messers 5 kann das Rohholz zerschnitten bzw. zerhackt werden, um die Hackschnitzel herzustellen. Die Hackereinheit 3 kann ein oder mehrere Messer 5 umfassen.

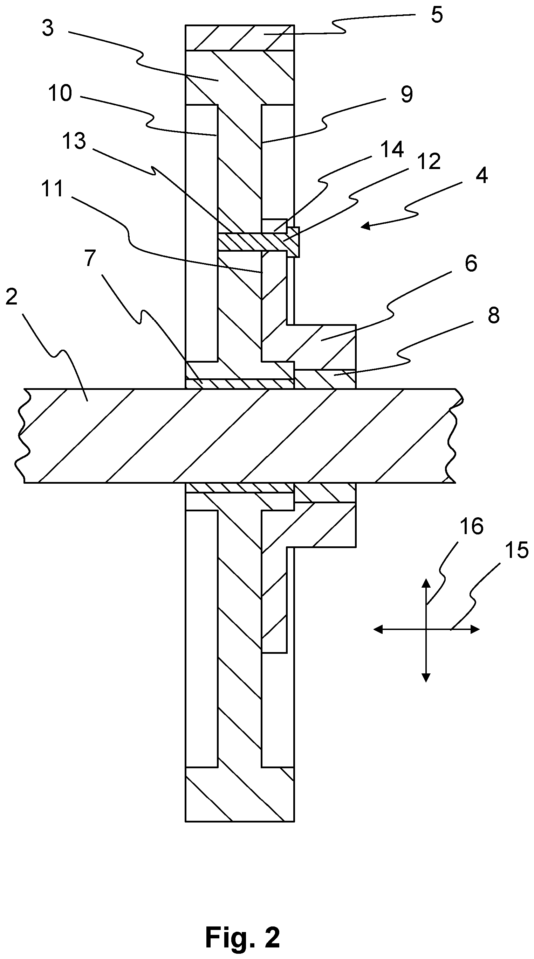

Des Weiteren können die Hackereinheiten 3 unabhängig voneinander auf der Rotorwelle 2 angeordnet sein. Dies bedeutet, dass jede Hackereinheit 3 einzeln arbeiten kann, ohne die anderen zu beeinflussen. Ein Vorteil dieser Anordnung ist, dass bei einer möglichen Blockade einer einzelnen Hackereinheit 3 die anderen Hackereinheiten 3 nicht beeinflusst werden. Dies erhöht die Zuverlässigkeit, den Wartungsaufwand bei der Blockade und die Betriebszeit des Hackschnitzelrotors 1. Dieses Merkmal wird in der folgenden Figur 2 durch die Überlastsicherung 4 klar.

Zusätzlich oder alternativ können die Hackereinheiten 3 voneinander beabstandet auf der Rotorwelle 2 angeordnet sein.

Ferner umfasst der Hackschnitzelrotor 1 des hier gezeigten Ausführungsbeispiels mehrere Messer 5, von denen in Figur 1 die Messer 5a - 5e dargestellt sind. Diese Messer 5 sind auf den Hackereinheiten 3 angeordnet und dienen zur Zerkleinerung des Rohholzes. Die Messer 5 sind derart angeordnet, dass sie bei der Drehbewegung des Hackschnitzelrotors 1 das Rohholz schneiden. Ein Vorteil der Messer 5 ist es, das Holz in gleichmäßige Hackschnitzel zu zerkleinern, was die Qualität des Endprodukts verbessert.

Das in Figur 2 dargestellte Ausführungsbeispiel zeigt eine Schnittansicht der Hackereinheit 3, der Mitnehmereinheit 6, der Überlastsicherung 4 und der Rotorwelle 2. Die Rotorwelle 2 ist hier lediglich teilweise dargestellt. In dieser Schnittansicht ist lediglich eine Hackereinheit 3 gezeigt. Die Hackereinheiten 3 können vorteilhafterweise untereinander gleich ausgebildet sein.

Des Weiteren ist hier die Rotorwelle 2 gezeigt. Die Rotorwelle 2 dient als Hauptachse des Hackschnitzelrotors 1. Die Rotorwelle 2 ist drehbar, so dass die Hackereinheiten 3 rotiert werden können, um das Rohholz zu Zerhacken. Die Rotorwelle 2 wird angetrieben, beispielsweise von einem Antrieb des Hackerfahrzeugs und/oder einem Antrieb der Hackervorrichtung.

Des Weiteren umfasst der Hackschnitzelrotor 1 die hier gezeigte Überlastsicherung 4. Die Überlastsicherung 4 schützt die Rotorwelle 2 und die Hackereinheit 3 vor Schäden durch übermäßiges Drehmoment. Sie sorgt für eine längere Lebensdauer der Rotorwelle 2 und der Hackereinheit 3.

Die Überlastsicherung 4 ist gemäß dem vorliegenden Ausführungsbeispiel derart ausgebildet und/oder angeordnet, dass diese eine Übertragung eines Drehmoments zum Rotieren der zumindest einen Hackereinheit 3 von der Rotorwelle 2 auf die zumindest eine Hackereinheit 3 übertragen kann. Dies gewährleistet, dass die Hackereinheit 3 von der Rotorwelle 2 angetrieben werden kann. Wenn die Überlastsicherung 4 auslöst, wird das Drehmoment nicht mehr zwischen der Rotorwelle 2 und der Hackereinheit 3 übertragen. Dadurch können mechanische Schäden verhindert und Ausfallzeiten reduziert werden.

Die Überlastsicherung 4 ist ferner derart ausgebildet und/oder angeordnet, dass diese ein maximales Drehmoment von der Rotorwelle 2 auf die zumindest eine Hackereinheit 3 übertragen kann. Zusätzlich oder alternativ ist die Überlastsicherung 4 derart ausgebildet und/oder angeordnet, dass die Überlastsicherung 4 bei Überschreiten des maximalen Drehmoments die Übertragung des Drehmoments von der Rotorwelle 2 auf die zumindest eine Hackereinheit 3 unterbricht. Das maximale Drehmoment kann hierbei derart bemessen sein, dass noch keine Beschädigungen am Hackschnitzelrotor 1 auftreten. Des Weiteren bedeutet es, dass wenn die Überlastsicherung 4 auslöst, das Drehmoment nicht mehr zwischen der Rotorwelle 2 und der Hackereinheit 3 übertragen wird. Dies verhindert eine Überlastung und mögliche Schäden an der Rotorwelle 2 und der Hackereinheit 3. Wenn beispielsweise die Hackereinheit 3 blockiert wird, weil ein Fremdkörper zum Hackschnitzelrotor 1 gelangt, löst die Überlastsicherung 4 aus und die Hackereinheit 3 kann sich verhaken, aber die Rotorwelle 2 wird nicht belastet, weil kein Drehmoment mehr von der Rotorwelle 2 auf die Hackereinheit 3 übertragen wird.

Wie hier weiterhin gezeigt ist, ist die Überlastsicherung 4 scheibenseitig mit der Hackereinheit 3 und wellenseitig mit der Rotorwelle 2 gekoppelt. Diese Kopplung ermöglicht eine zuverlässige Übertragung des Drehmoments und schützt gleichzeitig vor mechanischen Überlastungen.

Gemäß dem vorliegenden Ausführungsbeispiel ist die Hackereinheit 3 drehbar auf der Rotorwelle 2 angeordnet. Die Drehbarkeit der Hackereinheit 3 wird im vorliegenden Ausführungsbeispiel durch ein Hackereinheitslager 7, insbesondere einem Wälzlager und/oder einem Gleitlager, ermöglicht. Durch die Drehbarkeit der Hackereinheit 3 auf der Rotorwelle 2 kann beim Auslösen der Überlastsicherung 4 die Rotorwelle 2 gegenüber der Hackereinheit 3 frei drehen. Die Hackereinheit 3 kann sich verhaken, wobei keine Drehmomente mehr zwischen der Rotorwelle 2 und der Hackereinheit 3 ausgetauscht werden. Das Hackereinheitslager 7 reduziert außerdem die Reibung zwischen der Hackereinheit 3 und der Rotorwelle 2, wodurch ein leichterer und effizienterer Betrieb gewährleistet wird. Der Vorteil der Hackereinheit 3 liegt darin, dass sie nach einer Überlastung, bei der die Überlastsicherung 4 auslöst, frei auf der Rotorwelle 2 rotieren kann. Dies verhindert Schäden an der Rotorwelle 2 und der Hackereinheit 3.

Gemäß dem vorliegenden Ausführungsbeispiel umfasst der Hackschnitzelrotor 1 die Mitnehmereinheit 6. Gemäß einem vorliegenden Ausführungsbeispiel verbindet die Überlastsicherung 4 die Mitnehmereinheit 6 und die Hackereinheit 3, um die Drehbewegung der Rotorwelle 2 auf die Hackereinheit 3 zu übertragen. Die Überlastsicherung 4 ist zwischen der Mitnehmereinheit 6 und der Hackereinheit 3 angeordnet. Diese Verbindung mittels der Überlastsicherung 4 sorgt dafür, dass das Drehmoment zuverlässig übertragen wird und gleichzeitig bei einer Überlastung unterbrochen werden kann. Der Vorteil der Mitnehmereinheit 6 besteht außerdem darin, dass sie eine stabile, flächige und sichere Verbindung zwischen der Rotorwelle 2 und der Hackereinheit 3 bietet.

Die Mitnehmereinheit 6 ist vorzugsweise drehfest auf der Rotorwelle 2 angeordnet, um die Drehbewegung der Rotorwelle 2 auf die Hackereinheit 3 zu übertragen. Die Mitnehmereinheit 6 ist vorzugsweise kraft-, form- und/oder stoffschlüssig auf der Rotorwelle 2 angeordnet, um eine feste Verbindung zu gewährleisten.

Gemäß dem vorliegenden Ausführungsbeispiel ist die Mitnehmereinheit 6 mittels einer Spannvorrichtung 8 auf der Rotorwelle 2 gehalten, was eine zuverlässige Übertragung des Drehmoments sicherstellt. Alternativ zur Spannvorrichtung 8 kann auch eine allgemeine Fixiervorrichtung die Mitnehmereinheit 6 auf der Rotorwelle 2 drehfest fixieren.

Da die Mitnehmereinheit 6 vorteilhafterweise fest auf der Rotorwelle 2 angeordnet ist, dreht sich die Mitnehmereinheit 6 stets mit der Rotorwelle 2 mit. Wenn die Überlastsicherung 4 auslöst, dreht sich infolgedessen die Mitnehmereinheit 6 gegenüber der Hackereinheit 3, die beispielsweise verklemmt ist und somit feststeht.

Gemäß dem vorliegenden Ausführungsbeispiel ist die Überlastsicherung 4 zwischen einer Hackerstirnseite 9, 10 der Hackereinheit 3 und einer Mitnehmerstirnseite 11 der Mitnehmereinheit 6 angeordnet. Diese Anordnung erlaubt es, das Drehmoment von der Rotorwelle 2 auf die Hackereinheit 3 zu übertragen. Ferner liegt, wie hier zu sehen ist, die Mitnehmereinheit 6 mit ihrer Mitnehmerstirnseite 11 an einer der beiden Hackerstirnseiten 9, 10 an. Hierdurch kann eine flächige Verbindung zwischen der Mitnehmereinheit 6 und der Hackereinheit 3 ausgebildet werden. Die Hackereinheit 3 weist zwei Hackerstirnseiten 9, 10, nämlich eine erste und eine zweite Hackerstirnseite 9, 10 auf. Die Mitnehmereinheit 6 ist hier an der ersten Hackerstirnseite 9 angeordnet. Zusätzlich oder alternativ kann die Mitnehmereinheit 6 auch an der zweiten Hackerstirnseite 10 angeordnet sein.

Ferner umfasst die Überlastsicherung 4 des vorliegenden Ausführungsbeispiels zumindest ein Überlastelement 12. Das Überlastelement 12 kann beispielsweise ein Zerstörelement sein, das im bestimmungsgemäßen Gebrauch bei Überschreiten des maximalen Drehmoments zerstört wird. Das derart ausgebildete Überlastelement 12 als Zerstörelement bietet eine zuverlässige Methode zur Unterbrechung der Drehmomentübertragung im Falle einer Überlastung. Dies schützt die Hackereinheit 3 und die Rotorwelle 2 vor mechanischen Schäden.

Zusätzlich oder alternativ kann die Überlastsicherung 4 auch eine Sollbruchstelle aufweisen. Eine Sollbruchstelle ermöglicht eine präzise Kontrolle der maximalen Belastung, die die Überlastsicherung 4 aushalten kann. Dies bietet zusätzlichen Schutz und verhindert Schäden an der Hackereinheit 3 und der Rotorwelle 2.

Des Weiteren kann die Überlastsicherung 4 und/oder das zumindest eine Überlastelement 12 eine Schereinheit sein. Die Schereinheit sorgt für eine kontrollierte und sichere Trennung der Hackereinheit 3 von der Rotorwelle 2 bzw. von der Mitnehmereinheit 6 im Falle einer Überlastung.

Bei der Schereinheit kann es sich um einen Scherstift und/oder eine Scherschraube handeln. Scherstifte und Scherschrauben bieten eine einfache und effektive Lösung für die Überlastsicherung 4. Sie sind leicht zu ersetzen, sind kostengünstig und bieten einen zuverlässigen Schutz vor mechanischen Überlastungen.

Wie hier zu sehen ist, kann das Überlastelement 12 abscheren, wenn die Hackereinheit 3 blockiert bzw. verklemmt ist. Die Mitnehmereinheit 6 und die Hackereinheit 3 scheren das Überlastelement 12 ab, so dass das Drehmoment nicht mehr von der Rotorwelle 2 auf die Hackereinheit 3 übertragen werden kann.

Wie das vorliegende Ausführungsbeispiel der Figur 2 ebenso zeigt, ist das Überlastelement 12 in einer Hackereinheitenöffnung 13 der Hackereinheit 3 und in einer Mitnehmeröffnung 14 der Mitnehmereinheit 6 angeordnet. Diese Überlastelemente 12 sind so ausgelegt, dass sie die Drehbewegung der Rotorwelle 2 auf die Hackereinheit 3 übertragen können. Diese Anordnung ermöglicht eine kompakte und effiziente Integration der Überlastsicherung 4 in die Hackereinheit 3. Die Anordnung des Überlastelements 12 in der Hackereinheitenöffnung 13 und/oder in der Mitnehmeröffnung 14 sorgt für eine stabile und sichere Befestigung des Überlastelements 12. Dies gewährleistet eine zuverlässige Funktion der Überlastsicherung 4 unter Betriebsbedingungen. Ein weiterer Vorteil dieser Anordnung ist es, dass die Überlastelemente 12 bei Überschreiten des maximalen Drehmoments zerstört werden, wodurch die Überlastsicherung 4 auslöst und die Drehmomentübertragung unterbrochen wird. Dies verhindert größere Schäden am System und ermöglicht eine einfache und kostengünstige Reparatur durch den Austausch der Überlastelemente 12.

Das Überlastelement 12 kann beispielsweise, wie auch hier schematisch gezeigt ist, als Überlastschraube bzw. als Scherschraube ausgebildet sein. Dann ist es von Vorteil, wenn die Hackereinheitenöffnung 13 und/oder die Mitnehmeröffnung 14 ein Gewinde aufweisen, so dass das Überlastelement 12 in die Hackereinheitenöffnung 13 und/oder in die Mitnehmeröffnung 14 eingeschraubt werden kann. Infolgedessen ist das Überlastelement 12 fixiert, auch wenn die Überlastsicherung 4 ausgelöst hat, das heißt, wenn die Scherschraube abgerissen ist.

Die Hackereinheitenöffnung 13 und die Mitnehmeröffnung 14 sind in diesem Ausführungsbeispiel quer zu einer Radialrichtung 16 der Hackereinheit 3 und der Mitnehmereinheit 6 orientiert. Zudem sind die Hackereinheitenöffnung 13 und die Mitnehmeröffnung 14 in Richtung einer Axialrichtung 15 der Rotorwelle 2 ausgerichtet. Diese Orientierung ermöglicht eine platzsparende Platzierung und Funktion der Überlastelemente 12. Der Vorteil dieser Orientierung besteht darin, dass sie eine effiziente und genaue Übertragung der Kräfte ermöglicht, was zu einer verbesserten Leistung und Zuverlässigkeit des Hackschnitzelrotors 1 führt.

Ferner kann die Überlastsicherung 4 mehrere Überlastelemente 12 umfassen, die vorzugsweise in einer Umfangsrichtung der Hackereinheit 3 voneinander beabstandet angeordnet sind. Zusätzlich oder alternativ können die Überlastelemente 12 denselben radialen Abstand zur Rotorwelle 2 aufweisen.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

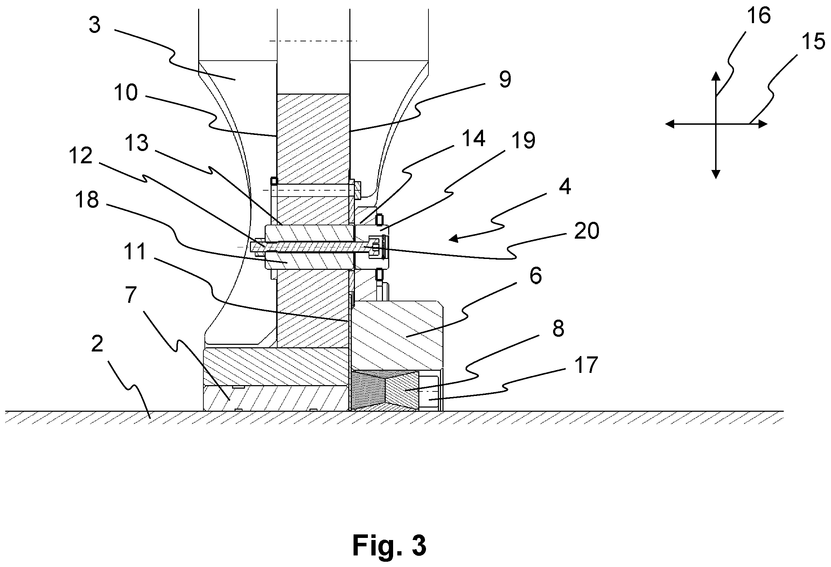

Figur 3 zeigt eine im Vergleich zur Figur 2 detaillierte Schnittansicht der Hackereinheit 3 auf der Rotorwelle 2.

Das Hackereinheitslager 7 ist hier als Gleitlager dargestellt.

Des Weiteren ist hier die Spannvorrichtung 8 dargestellt, mittels der die Mitnehmereinheit 6 drehfest auf der Rotorwelle 2 angeordnet ist. Die Spannvorrichtung 8 kann gemäß dem vorliegenden Ausführungsbeispiel mittels einer Spannschraube 17 gespannt werden, die sich daraufhin zwischen der Rotorwelle 2 und der Mitnehmereinheit 6 spannt.

Ferner ist das Überlastelement 12 in einer Hülse 18 in der Hackereinheit 3 zumindest teilweise aufgenommen.

Weiterhin ist in diesem Ausführungsbeispiel zu sehen, dass die Überlastsicherung 4 eine Aufnahme 19 aufweist. In dieser Aufnahme 19 ist ein Schraubenkopf 20 der Überlastschraube als Überlastelement 12 angeordnet. Mit Hilfe der Aufnahme 19 kann nach dem Auslösen der Überlastsicherung 4 bzw. nach dem Abreißen der Überlastschraube als Überlastelement 12 der Schraubenkopf 20 aufgenommen werden. Dies verhindert, dass sich der abgerissene Teil des Überlastelements 12 frei herumbewegt. Die Aufnahme 19 ist hier mittels des Schraubenkopfes 20 des Überlastelements 12 als Überlastschraube beschrieben. Wenn das Überlastelement 12 keine Überlastschraube, sondern ein allgemeines Zerstörelement ist, dann kann mit Hilfe der Aufnahme 19 der abgerissene Teil des Zerstörelements als Überlastelement 12 aufgenommen werden. Es kann auch ein der Mitnehmereinheit 6 zugewandtes Ende des Überlastelements 12 aufgenommen werden. Die Aufnahme 19 ist hier im Bereich der ersten Hackerstirnseite 9 der Hackereinheit 3 angeordnet. Zusätzlich oder alternativ kann die Aufnahme 19 (oder eine weitere Aufnahme 19) im Bereich der zweiten Hackerstirnseite 10 angeordnet sein. Mit Hilfe dieser Aufnahme 19, die hier nicht gezeigt ist, kann das abgerissene Teil des Überlastelements 12 bzw. des Zerstörelement aufgenommen werden, das der zweiten Hackerstirnseite 10 der Hackereinheit 3 zugeordnet ist.

### Bezugszeichenliste

- 1: Hackschnitzelrotor
- 2: Rotorwelle
- 3: Hackereinheit
- 4: Überlastsicherung
- 5: Messer
- 6: Mitnehmereinheit
- 7: Hackereinheitslager
- 8: Spannvorrichtung
- 9: erste Hackerstirnseite
- 10: zweite Hackerstirnseite
- 11: Mitnehmerstirnseite
- 12: Überlastelement
- 13: Hackereinheitenöffnung
- 14: Mitnehmeröffnung
- 15: Axialrichtung
- 16: Radialrichtung
- 17: Spannschraube
- 18: Hülse
- 19: Aufnahme
- 20: Schraubenkopf

## Patentansprüche

1. Hackschnitzelrotor (1) für ein Hackerfahrzeug und zum Zerhacken von, insbesondere stamm- und/oder astartigen, Rohholz zur Herstellung von Hackschnitzeln
mit zumindest einer Rotorwelle (2),
mit zumindest einer auf der Rotorwelle (2) angeordneten Hackereinheit (3), mittels der das Rohholz zerkleinert werden kann, und
mit einer Überlastsicherung (4),
**dadurch gekennzeichnet,**
**dass** die Überlastsicherung (4) derart ausgebildet und/oder angeordnet ist, dass diese ein Drehmoment zum Rotieren der zumindest einen Hackereinheit (3) von der Rotorwelle (2) auf die zumindest eine Hackereinheit (3) übertragen kann.

2. Hackschnitzelrotor nach dem vorherigen Anspruch, **dadurch gekennzeichnet, dass** die Überlastsicherung (4) derart ausgebildet und/oder angeordnet ist, dass diese ein maximales Drehmoment von der Rotorwelle (2) auf die zumindest eine Hackereinheit (3) übertragen kann und/oder
dass die Überlastsicherung (4) bei Überschreiten des maximalen Drehmoments die Übertragung des Drehmoments von der Rotorwelle (2) auf die zumindest eine Hackereinheit (3) unterbricht.

3. Hackschnitzelrotor nach einem oder mehreren der vorherigen Ansprüche, **dadurch gekennzeichnet, dass** die Überlastsicherung (4) scheibenseitig mit der Hackereinheit (3) und wellenseitig mit der Rotorwelle (2) gekoppelt ist.

4. Hackschnitzelrotor nach einem oder mehreren der vorherigen Ansprüche, **dadurch gekennzeichnet, dass** die Hackereinheit (3) drehbar auf der Rotorwelle (2) angeordnet ist, so dass sich die Hackereinheit (3) gegenüber der Rotorwelle (2) nach Unterbrechung der Übertragung des Drehmoments durch die Überlastsicherung (4) frei drehen kann, und/oder
dass die Hackereinheit (3) mittels eines Hackereinheitslagers (7), insbesondere eines Wälzlagers und/oder eines Gleitlagers, drehbar auf der Rotorwelle (2) angeordnet ist.

5. Hackschnitzelrotor nach einem oder mehreren der vorherigen Ansprüche, **dadurch gekennzeichnet, dass** auf der Rotorwelle (2) eine Mitnehmereinheit (6), insbesondere drehfest, angeordnet ist, und
dass die Mitnehmereinheit (6) vorzugsweise eine Mitnehmerscheibe ist und/oder
dass die Mitnehmereinheit (6) vorzugsweise kraft-, form- und/oder stoffschlüssig auf der Rotorwelle (2) angeordnet ist und/oder dass die Mitnehmereinheit (6) vorzugsweise mittels einer Spannvorrichtung (8) auf der Rotorwelle (2) angeordnet ist.

6. Hackschnitzelrotor nach einem oder mehreren der vorherigen Ansprüche, **dadurch gekennzeichnet, dass** die Überlastsicherung (4) die Mitnehmereinheit (6) und die Hackereinheit (3) verbindet, um die Drehbewegung der Rotorwelle (2) auf die Hackereinheit (3) zu übertragen.

7. Hackschnitzelrotor nach einem oder mehreren der vorherigen Ansprüche, **dadurch gekennzeichnet, dass** die Überlastsicherung (4) zwischen einer Hackerstirnseite (9, 10) der Hackereinheit (3) und einer Mitnehmerstirnseite (11) der Mitnehmereinheit (6) angeordnet ist.

8. Hackschnitzelrotor nach einem oder mehreren der vorherigen Ansprüche, **dadurch gekennzeichnet, dass** die Überlastsicherung (4) zumindest ein Überlastelement (12) umfasst, das die Drehbewegung der Rotorwelle (2) auf die Hackereinheit (3) übertragen kann, und
dass die Überlastsicherung (4), insbesondere das zumindest eine Überlastelement (12), vorzugsweise in einer Hackereinheitenöffnung (13) der Hackereinheit (3) angeordnet ist und/oder
dass die Überlastsicherung (4), insbesondere das zumindest eine Überlastelement (12), vorzugsweise in einer Mitnehmeröffnung (14) der Mitnehmereinheit (6) angeordnet ist.

9. Hackschnitzelrotor nach einem oder mehreren der vorherigen Ansprüche, **dadurch gekennzeichnet, dass** die Hackereinheitenöffnung (13) und/oder die Mitnehmeröffnung (14) quer zu einer Radialrichtung (16) der Hackereinheit (3) und/oder der Mitnehmereinheit (6) orientiert ist.

10. Hackschnitzelrotor nach einem oder mehreren der vorherigen Ansprüche, **dadurch gekennzeichnet, dass** die Hackereinheitenöffnung (13) und/oder die Mitnehmeröffnung (14) in Richtung einer Axialrichtung (15) der Rotorwelle (2) orientiert ist.

11. Hackschnitzelrotor nach einem oder mehreren der vorherigen Ansprüche, **dadurch gekennzeichnet, dass** das zumindest eine Überlastelement (12) ein Zerstörelement ist, das im bestimmungsgemäßen Gebrauch bei Überschreiten des maximalen Drehmoments zerstört wird, und/oder
dass die Überlastsicherung (4) eine Sollbruchstelle aufweist und/oder dass die Überlastsicherung (4) und/oder das zumindest eine Überlastelement (12) eine Schereinheit ist und/oder
dass die Schereinheit ein Scherstift und/oder eine Scherschraube ist.

12. Hackschnitzelrotor nach einem oder mehreren der vorherigen Ansprüche, **dadurch gekennzeichnet, dass** die Überlastsicherung (4) mehrere Überlastelemente (12) umfasst, die vorzugsweise in einer Umfangsrichtung der Hackereinheit (3) voneinander beabstandet angeordnet sind, und dass die mehreren Überlastelemente (12) vorzugsweise denselben radialen Abstand zur Rotorwelle (2) aufweisen.

13. Hackschnitzelrotor nach einem oder mehreren der vorherigen Ansprüche, **dadurch gekennzeichnet, dass** auf der Rotorwelle (2) mehrere Hackereinheiten (3) angeordnet sind, denen jeweils eine Überlastsicherung (4) zugeordnet ist, und
dass die mehreren Hackereinheiten (3) vorzugsweise voneinander unabhängig auf der Rotorwelle (2) angeordnet sind und/oder
dass die mehreren Hackereinheiten (3) vorzugsweise voneinander beabstandet auf der Rotorwelle (2) angeordnet sind.

14. Hackervorrichtung für ein Hackerfahrzeug und zum Zerhacken von, insbesondere stamm- und/oder astartigen, Rohholz zur Herstellung von Hackschnitzeln
mit zumindest einem Hackschnitzelrotor (1), **dadurch gekennzeichnet, dass** der Hackschnitzelrotor (1) gemäß einem oder mehreren der vorherigen Ansprüche ausgebildet ist.

15. Hackerfahrzeug, insbesondere Hacker-LKW, Arbeitsmaschine und/oder Anhänger,
mit einer Hackervorrichtung zum Zerhacken von, insbesondere stamm- und/oder astartigen, Rohholz zur Herstellung von Hackschnitzeln, die zumindest einen
Hackschnitzelrotor (1) umfasst,
**dadurch gekennzeichnet,**
**dass** der Hackschnitzelrotor (1) gemäß einem oder mehreren der vorherigen Ansprüche ausgebildet ist.
